# EUROPEAN PATENT APPLICATION

(11) **EP 2 187 338 A1**
(43) Date of publication of application: **19.05.2010**
(21) Application number: 08169061.2
(22) Date of filing: 13.11.2008
(51) Int. Cl.: G06K 9/00, H04L 9/00

(54) **Biometric pseudonyms of a fixed-sized template**

(71) Applicant: Berner Fachhochschule, Technik und Informatik (HTI), 2501 Biel (CH)
(72) Inventor: Jaquet-Chiffelle, David-Olivier Berner Fachhochschule Tecknik und Informatik HTI, 2501 Bienne (CH); Anrig, Bernhard, 3250 Lyss (CH); Benoist, Emmanuel, 68350 Didenheim (FR)
(74) Representative: GLN

(57) **Abstract**

The present invention discloses a method for generating a biometric pseudonym, comprising the following steps:
- selecting a set of zones of a biometric template,
- projecting each selected template zone on an error-correcting code, to produce a set of projected template zone,
- applying on each projected template zone a mathematical one-way transformation.

Additionally, the present invention discloses a procedure comprising the following steps:
- acquiring a plurality of biometric raw data, each one being from a different class,
- producing an enrolled biometric template from each enrolled biometric raw data,
- producing an enrolled biometric pseudonym from each enrolled biometric template,
- storing, for each selected template zone of each enrolled biometric template:
• a class identifier,
• the difference vector between the selected template zone and the projected template zone,
• the transformed zone,
• the shape of the selected template zone,
• the dimensions of the selected template zone, and
• the position of the selected template zone.

## Description

### Field of the invention

The present invention relates generally to systems and methods using biometric data to authenticate a physical person, e.g. when identifying this person. More particularly, the invention relates to protecting privacy of individuals when processing or using their personal biometric data.

### Background of the invention

In biometric authentication, biological features are measured from a human biological entity (such as a finger, face, iris, voice, palm, DNA...) to get biometric data that are used to authenticate an individual. For that purpose, biometric raw data (for example the picture of a fingerprint or of an iris) is processed to be transformed into a biometric template.

A biometric template is a synthesis of all the characteristics extracted from the source, in a suitable format so as to allow comparison between different templates extracted from a similar biological entity.

Generally, such techniques require two steps:
- an enrolment process, during which biometric data from an individual are acquired, processed and stored,
- an authentication process, during which biometric data from an individual are acquired, processed and compared to biometric data previously stored during the enrolment process.

The authentication process may be either verification or identification.
- Verification consists in checking that the biometric data of the user are close enough to the biometric data stored supposedly for this user.
- Identification consists in determining, among a set of previously stored biometric data, if one of them is close enough to the user's biometric data.

Among all biometric techniques, iris recognition enables to authenticate individuals with speed and reliability. A popular implementation is disclosed in the U.S. Pat. No. 5,291,560.

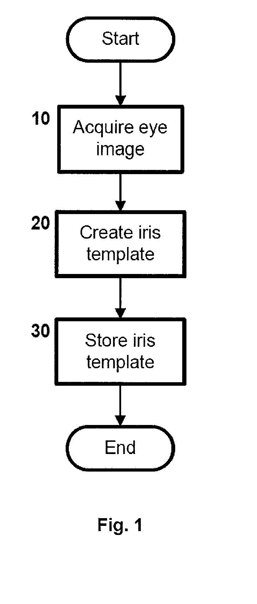

Figure 1 depicts the enrolment algorithm for iris recognition as is well-known in the art. Traditionally, an individual presents a class to be enrolled into the system. A class is defined as a biological entity of one individual. In iris recognition systems, a class is defined as one eye of one individual.

At step 10, a picture is acquired through a camera. At step 20, the picture is used to compute the iris template which, at step 30, is saved in an enrolment database or on a token. In both cases, the biometric data are stored for further reference. Sometimes, even the raw image is stored instead of the template.

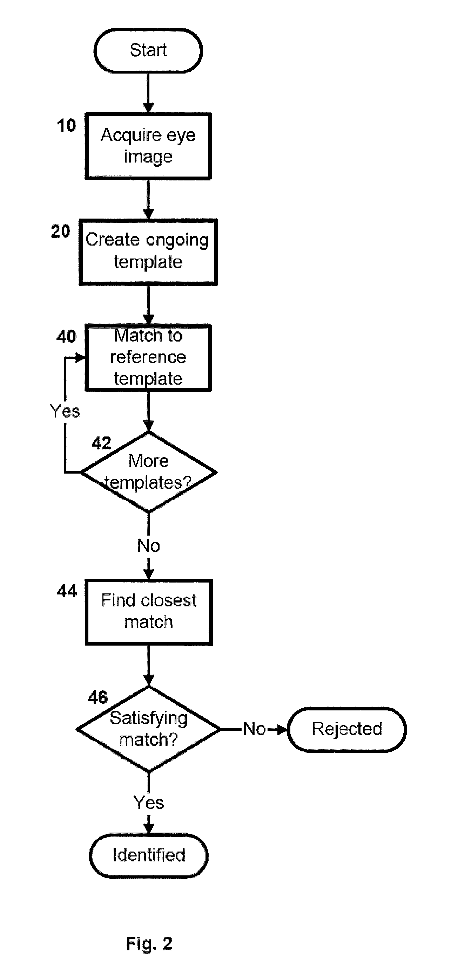

Figure 2 depicts the identification algorithm of the iris recognition method as is also well-known in the art. Likewise, at step 10, a person to be identified presents his eye. At step 20, the system creates his iris template. This ongoing template (i.e. the template based on the picture acquired for the identification) is matched at steps 40 and 42 to all the reference templates stored in the enrolment database. The matching operates on whole templates and is based on a measure of similarity like the Hamming distance, that gives the proportion of data that are equal between the two templates to check for matching. Usually, the closest match, if it is close enough, identifies at steps 44 and 46 the corresponding user. Otherwise, the identification fails and the person is rejected, i.e. identification privilege is not granted.

This technique offers very low error rates, i.e. verify or identify individuals with a high confidence level. However, as biometric templates are directly processed, stored and compared, such iris recognition method has several disadvantages, with regard to personal security and privacy. First, if biometric data are compromised (for example if anyone can access to the biometric template of a user), the owner has no choice but to revoke them - if ever possible - to avoid future fraudulent use. In doing so, he loses permanently all benefits linked to his biological entity - here, his iris - in terms of convenience and security. Second, if a person registers the same biometric for use in different applications, his corresponding partial identities can be easily linked through his biometric compromised data. Linkability of personal information constitutes a serious threat to his privacy.

In patent WO 02/095657 entitled "Application-specific biometric templates", it is suggested that the biometric template is transformed for each application by a secret reversible transformation such as permutation or XOR encryption. This technique prevents from storing sensitive biometric data. During enrolment process, biometric templates are produced similarly to above, each template is then transformed using the secret reversible transformation, and the transformed template is stored in a database or on a token. During identification process, the ongoing template is produced similarly to above. Transformed templates are reverted to biometric templates (by applying a reverse transformation), to be matched with the ongoing template as described above. Linkability concerns are reduced since transformed templates from different applications are not directly compatible (i.e. a template transformed for one application cannot be directly used in another application having a different secret transformation). However, a transformed template for application A may be used by application B but it has first to be transformed by reversing transformation A and then applying transformation B. Moreover, applying a reversible transformation only makes biometric data harder to compromise since it simply relies on a secret key. A secret key may also be compromised, and if encryption is too weak, brute force means may even allow retrieving the original biometric template, implying the same privacy and/or security threats as above.

Mathematical one-way transformations can achieve both security and privacy protection. Sensitive data, i.e. the biometric template, may be transformed into non-sensitive data by applying a mathematical one-way transformation, such as cryptographic hash function. Such transformation, perfectly known by a skilled person in the art, prevents from getting back to the biometric data, even by knowing the transformation applied. However, due to the natural intra-class variability of biometric data (i.e. for a single class, the template will slightly differ from one acquisition to another), biometric template is not suitable for directly applying a cryptographic mathematical one-way transformation. Even a one-bit difference in the template will lead to very different transformed data, making further similarity check meaningless.

The intra-class variability refers to the variability between two different acquisitions of the same class. The extra-class variability refers to the variability between the acquisitions of two different classes. Generally, an effective authentication system requires the intra-class variability to be as low as possible (i.e. two acquisition of the same class shall be as identical as possible), and the extra-class variability to be as high as possible (i.e. two acquisition of two different classes shall be as different as possible).

Hao, Anderson and Daugman have successfully applied biometric encryption to iris recognition (cf. F. Hao et al., "Combining cryptography with biometrics effectively", Technical Report UCAM-CL-TR-640, University of Cambridge, July 2005), by using a two-layer error correction technique to generate a constant string from a variable biometric template. Intra-class variability is eliminated by correcting random errors and burst errors, since slightly different templates will result in an exactly same string. However, the scheme works only if the proportion of invalid features in the biometric templates, due e.g. to occluding eyelids and eyelashes, is within the correcting capabilities of the code. Otherwise, non-valid template areas, which can be considered as noise, may introduce far more errors than what can practically be corrected, causing the transformation to fail.

The present invention proposes a method such that these drawbacks are avoided.

### Summary of the invention

The present invention discloses a method for generating a biometric pseudonym based on a biometric template, comprising the following steps:
- selecting a set of zones of a biometric template, each selected template zone having a shape, some dimensions and a position,
- projecting each selected template zone on an error-correcting code, to produce a projected zone, and
- applying on each projected zone a mathematical one-way transformation, to produce a set of transformed zones to be used as the biometric pseudonym.

Additionally, the present invention discloses a procedure comprising the following steps:
- acquiring a plurality of biometric raw data, each one being from a different class and called an enrolled biometric raw data,
- producing an enrolled biometric template from each enrolled biometric raw data,
- producing an enrolled biometric pseudonym from each enrolled biometric template,
- storing, in a non-volatile memory, for each zone of each enrolled biometric template:
   - a class identifier, unique for all zones of a given class,
   - a difference vector between the selected template zone and the projected template zone,
   - the transformed zone,
   - the shape of the selected template zone,
   - the dimensions of the selected template zone, and
   - the position of the selected template zone.

### Brief description of the drawings

The above and other objects, features, and advantages of the present invention will become further apparent from the following description referring to the accompanying drawings, in which:
- figure 1 is a flow diagram of the enrolment portion of the iris recognition method as is well-known in the art,
- figure 2 is a flow diagram of the identification portion of the iris recognition method as is well-known in the art,
- figure 3 shows the mapping of the iris region to the template domain,
- figure 4 is an example of the definition of a zone within the template domain,
- figure 5 is an example of a set of zones covering part of the valid features in a particular template,
- figure 6 is a flow diagram of the enrolment portion of the iris recognition method according to the invention,
- figure 7 is a flow diagram of the identification portion of the iris recognition method according to the invention. Detailled description

The computation of a biometric template from an iris raw image (taken by a camera) is well known by a person skilled in the art. The following steps are generally implemented.
- Iris localization and stretching. Using image processing techniques, the pupil is detected and excluded. Zones covered by eyelids, eyelashes or subject to light reflection are also detected by known image processing techniques and are marked as invalid data. The ring-shaped iris is then stretched into a rectangle, by basically transforming the polar coordinates into Cartesian coordinates.
- Wavelets transform. A 2D wavelet transform is applied in order to extract the biometric features (for instance, a Gabor wavelet transform is suitable). The result of this transformation is a complex vector for each original pixel. Since illumination and/or contrast may vary a lot between different images of the same iris, only phase information of each vector is kept. Additionally, a validity bit is computed for each pixel. A pixel is considered valid if all pixels used to compute the pixel's vector are valid, i.e. do not come from a region excluded by iris localisation process.

One can refer to U.S. Pat. No. 5,291,560 for a comprehensive description of the method.

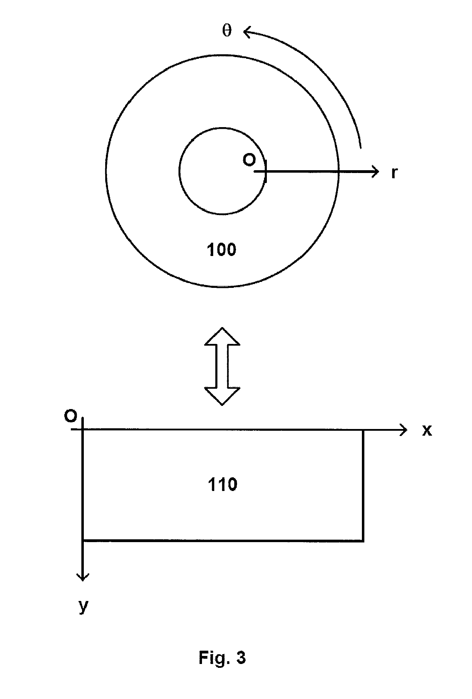

An iris template can be viewed as a matrix of fixed dimensions. Each of its elements is a biometric feature extracted from an iris. As shown in figure 3, the ring-shaped iris region 100 is generally mapped to the rectangular template domain 110. The horizontal axis x in a template corresponds to the angle θ in the iris, the vertical axis y to the radial axis r.

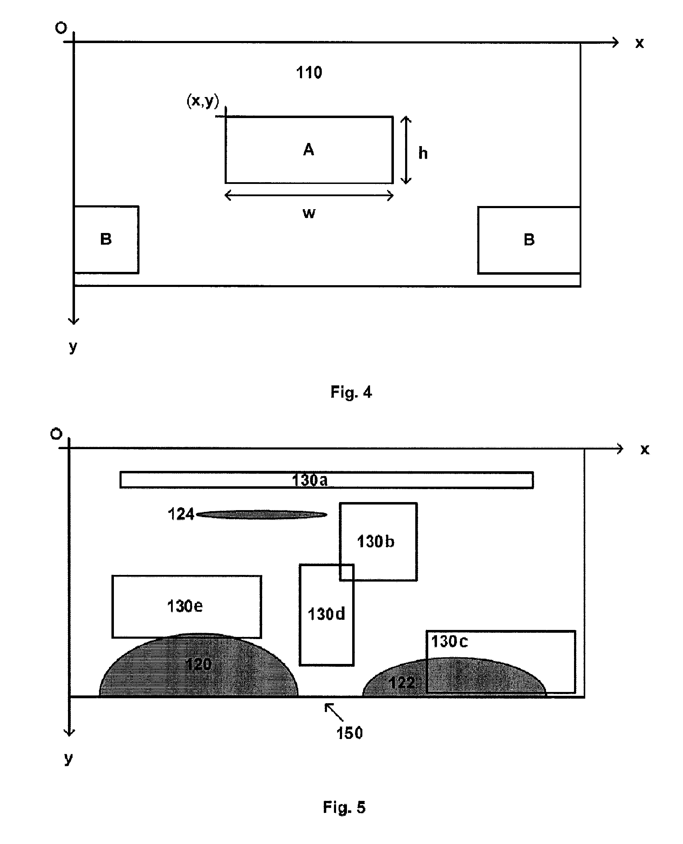

An important and advantageous aspect of the invention is to work with portions of biometric data (subtemplates) instead of entire templates, referring to such portions or subtemplates as zones. Figure 4 illustrates an example of the definition of a zone in the template domain 110. In this example, the zones are defined as rectangles of constant surface but of varying position and varying dimensions: zone A has its top left corner at (x, y) and is of height h and width w. When the ring-shape iris is mapped into a rectangular matrix as described above, the zones can loop horizontally but not vertically as illustrated by zone B. Thanks to the use of zones, it is possible to process data that are exclusively or mostly valid, and a significant advantage will become more apparent below.

In the following description, when referring to a valid zone, it means that the zone could contain a small amount of invalid data, but below a predetermined threshold, the case where the zone contains only valid data being of course included.

Figure 5 shows a sample iris template 150 with typical invalid areas due to the occlusion of the upper eyelid 120 and lower eyelid 122, and to a specular reflection 124. Five zones 130 are drawn to illustrate how the valid features can be partially covered. The zones 130b and 130d overlaps, the zone 130e contains a small amount of invalid data, and the zone 130c contains a large amount of invalid data. The zone 130e containing a small amount of invalid data could be considered as a valid zone, whereas the zone 130c, containing a large amount of invalid data, could be considered as invalid.

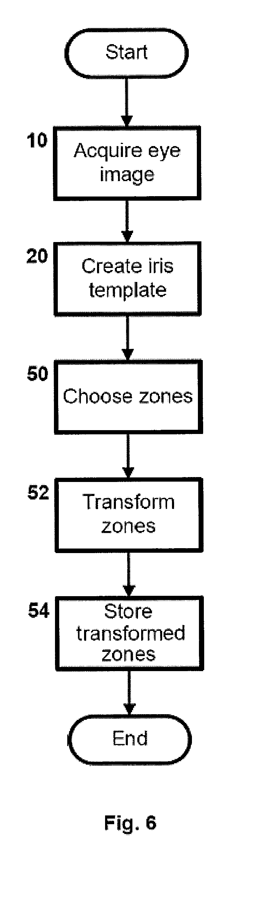

Figure 6 describes the enrolment algorithm according to the present invention. The steps of image acquisition 10 and template production 20 remain unchanged compared to algorithm described above. Invalid portions are detected as explained above. But instead of keeping the whole template, a fixed number N of zones are selected (and called selected template zones) at step 50, transformed (and called transformed zones) at step 52 as explained below and stored at step 54.

When the number of selected template zones in an enrolled template is below the number N of zones to be enrolled (meaning that the template contains too many invalid data), the template's validity rate is too low. Another template shall be enrolled again, based on a new acquisition of the user's iris, asking him to open his eyes wider and / or removing his glasses or contact lenses if any.

In a first embodiment of the zone selection process 50, zones are chosen sequentially among all valid zones, from one corner of the entire template.

In a second embodiment of the zone selection process 50, zones are randomly selected among all the valid zones, excluding overlapping zones.

In a third embodiment of the zone selection process 50, zones are randomly selected among all the valid zones, including overlapping zones.

The transformation 52 aims at solving the intra-class variability issue and subsequently at solving privacy or security issues about biometric data. It consists at least in:
- projecting each selected template zone on an error-correcting code, to produce a set of projected template zones, and
- applying on each projected template zone a one-way transformation, to produce a set of transformed zones.

During the transformation, an additional step can be advantageously implemented, consisting in combining a parameter data with each projected template zone, to produce a set of combined template zones. Each combined template zone is then transformed by a one-way transformation, to produce a set of transformed zones. The combination can be performed through a concatenation or any other known technique. This parameter data can be user-dependent, such as a password or a PIN (Personal Identification Number) code. It is either asked to the user during enrolment, or it can be allocated to the user. This parameter data can also be application-dependent. For example, an application A can combine always the same data Dₐ during enrolment, and another application B can combine always the same data D_{b} during enrolment, preventing application A and application B to share their biometric data once transformed using the mathematical one-way transformation. The parameter data can also be both user-dependent and application-dependent.

Error-correcting code can be viewed as a kind of geometric projection. Considering a general case, an error-correcting code is composed of a plurality of codewords (i.e. the words forming the code). The data to be corrected are projected on the codewords, the projection being normally performed by selecting the codeword whose distance from the data to correct is minimal. A Hamming distance is suitable for distance computation. It results in an error correction since a set of data that are close enough to a codeword will generally be projected onto the same codeword and the projected data (which is the codeword) is considered as the corrected data.

In the present invention, an error-correcting code is applied, during the enrolment process, to each selected template zone. Each selected template zone is projected on a codeword of the error-correcting code, called the projected template zone. Additionally, when projecting a selected template zone, the difference between the selected template zone and the projected template zone is computed and stored for each selected template zone, and will be used in the subsequent identification process described hereafter.. The difference can be viewed as a difference vector representing the "errors" of the selected template zone.

As mentioned above, the selected template zones on which the error-correcting code is applied, contains a number of invalid data under a given threshold. Advantageously, the threshold is determined so that the number of invalid data per template zone is within the error correcting ability of the error-correcting code. Working with zones containing mostly valid data and projecting them on an error-correcting code reduces drastically the intra-class variability. It means that two template zones (located at the same place in the templates), computed from two different pictures of the same class will generally be (slightly) different, but will be projected more often on the same codeword than two template zones from two different classes. The subsequent matching process can then be replaced by an equality test, instead of a similarity test. In contrast, projecting an entire template using an error-correcting code appears to be very impractical. It would either require that the templates contain only a small amount of errors to be within the correcting ability of an error-correcting code with many codewords, or to use an error-correcting code having the ability to correct a lot of errors. Ensuring a good picture quality may be difficult in practice, for example when the pictures are acquired outdoors. Correcting a large amount of error would generally result in using a code having fewer codewords, and would therefore increase the probability that two templates from two different classes are projected onto the same codeword.

Solving the intra-class variability makes it possible to apply a mathematical one-way transformation, as only an equality test makes sense after such a transformation is applied. Mathematical one-way transformations, in addition to the fact that they are not reversible (i.e. a reverse transformation does not exist), are such that it is practically infeasible to compute a pre-image for any given data, i.e., a data that would be transformed into this given data. Such transformations, which can be cryptographic hash functions, are easy to implement, but it is supposedly unfeasible to revert to the original data or to another pre-image. Consequently, data produced are non-sensitive since they cannot, in a practical sense, be reverted into biometric sensitive data.

The Reed-Muller RM(1,8) code, which is well known by a person skilled in the art, is successfully used in our invention for error correction. With this configuration, the code can correct up to 63 errors per 256-bit word. One can refer to the book "Introduction to coding and information theory" Springer-Verlag, 1997, by S. Roman, pp 234-243 for a comprehensive description of the code and its implementation.

One-way transformation is performed through the use of a standard hash function, such as for example SHA-256.

For each user to enrol, all the selected template zones are stored at step 54, still referring to figure 6. For each zone, at least the following data are stored:
- a class identifier, unique for all zones of a given enrolled class,
- the difference vector between the selected template zone and the projected template zone,
- the transformed zone (i.e. the projected template zone, possibly combined to a parameter data, and transformed by the one-way mathematical function),
- the shape of the selected template zone,
- the dimensions of the selected template zone, and
- the position of the selected template zone.

The whole set of data for the same template is what we call a biometric pseudonym, a pseudonym being a name or an identifier given to an individual, and which can be considered as a false name that does not necessarily reveal the actual identity of the individual using it or hidden behind it.

Adding a parameter data is a very interesting feature since, for a given class, it is possible to produce a plurality of biometric pseudonyms, by changing the parameter data. A biometric pseudonym can consequently be revoked (for instance when it is compromised), and replaced by another one, through a new enrolment with a new parameter data. When a pseudonym is compromised, the user can continue to benefit from the convenience of its biological entity for authentication purpose.

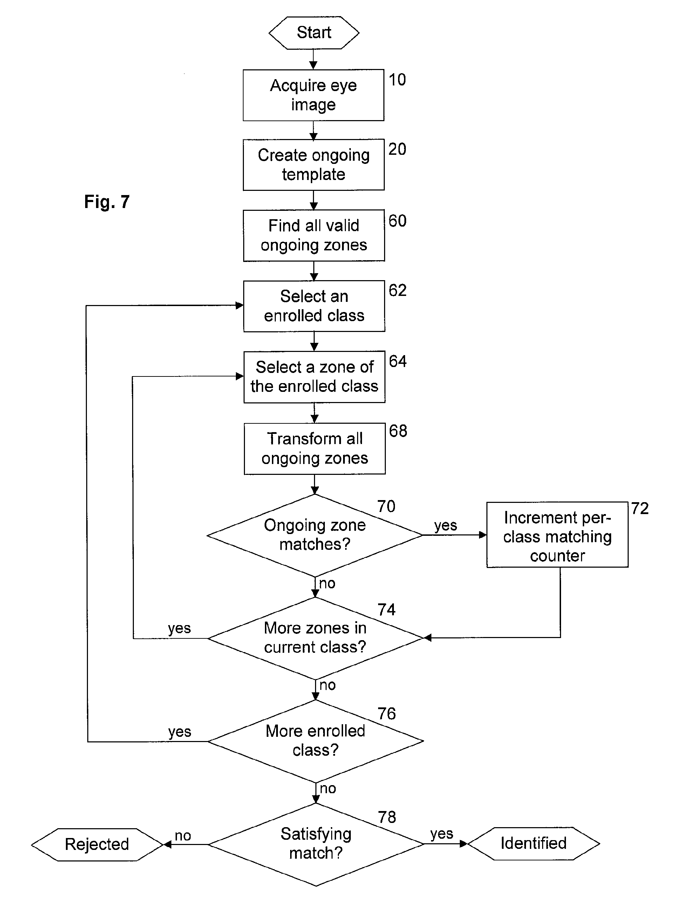

Figure 7 states a new identification algorithm.

While not necessarily all zones are stored during the enrolment, all possible valid zones of the ongoing biometric template are determined at step 60 and tested during the identification.

The process is iterative, being performed successively with each zone of each enrolled class stored during the enrolment procedure described hereunder.

An enrolled class is selected at step 62 (which enrolled class is selected being unimportant since all enrolled classes will be iteratively processed) and will be called the current enrolled class.

A zone of the current enrolled class is selected at step 64 (which zone is selected being unimportant since all zones of the current enrolled class will be iteratively processed) and will be called the current enrolled zone.

At step 68, all ongoing valid zones determined at step 60 are transformed according to the following steps:
- subtracting the difference vector of the current enrolled zone of the current enrolled class to each ongoing valid zone, to produce a set of translated ongoing zones,
- projecting each translated ongoing zone on the same error-correcting code as used during enrolment, to produce a set of projected ongoing zones, and
- transforming each projected ongoing zone by using the same mathematical one-way transformation as used during enrolment, to produce a set of transformed ongoing zones.

Subtracting the difference vector of the current enrolled zone of the current enrolled class to each ongoing valid zone is an interesting step in the process. This operation ensures that an ongoing valid zone is projected on the same codeword as its closest enrolled template zone. If this operation is omitted, the ongoing valid zone would be projected directly on its closest codeword. It could be possible, in that case, that an ongoing valid zone and a very close enrolled zone are not projected onto the same codeword, which is not what is expected.

When the ongoing valid zone contains some invalid data (it is recalled that a valid zone can contain a small amount of invalid data), the subtraction is performed only on the valid data, the invalid data being reported as is in the translated ongoing zone.

As for the enrolment procedure, an additional step can be advantageously implemented, consisting in combining a parameter data to each projected ongoing zone, to produce a set of combined ongoing zone. The parameter data can be also either user-dependent, application-dependent or both, and the combination algorithm shall be the same as for the enrolment procedure. The combined ongoing zone is then transformed by a one-way transformation, to produce a set of transformed ongoing zones. It has to be mentioned that combining a parameter data during the identification makes sense if and only if a parameter data was combined during the enrolment procedure. Moreover, when a parameter data was combined during the enrolment, the same parameter data shall be combined during identification procedure.

Step 70 is a matching process and searches if one of the transformed ongoing zones matches the current enrolled zone.

In a first embodiment of the matching process 70, an ongoing zone is considered to match the current enrolled zone when both zones have the same shape, the same dimensions (for example same height h and same width w for a rectangle shape, same diameter for a disc), the same position and the same transformed data.

In a second embodiment of the matching process 70, an ongoing zone is considered to match the current enrolled zone when they have the same shape, the same dimensions, the same transformed data and a close position (the coordinate x of the ongoing zone and the coordinate x of the current enrolled zone are not different from more than a given number, and the coordinate y of the ongoing zone and the coordinate y of the current enrolled zone are not different from more than a given number). This feature considers that the user can slightly tilt his head during iris image acquisition, leading to slightly shift the mapping of the iris in the template between enrolment and identification.

It is mentioned that, when a parameter data is combined during enrolment and identification, two transformed zone can match, in a practical sense, only if the same parameter data was given during enrolment and identification. Otherwise, transformed zone have no reason to match even for the same class.

For each enrolled class, a per-class matching counter is implemented. Each time an ongoing zone matches one of the current zone of the current enrolled class, the counter corresponding to the current enrolled class is incremented at step 72.

The steps 64, 68, 70 and 72 are repeated until all the zones of the current enrolled class are processed.

The steps 62, 64, 68, 70 and 72 are repeated until all the enrolled classes are processed.

At step 78, the closest matching class is found from the per-class matching counters whose value is the highest among all per-class matching counters. At step 80, the identification privilege is granted if the per-class matching counter whose value is the highest is above a threshold, which can be application dependent just as with traditional biometric systems.

In another embodiment, the search for the closest matching class can be replaced by the search for the first per-class matching counter whose value is above a threshold; this avoids repeating the process for the remaining enrolled classes.

Tests have been performed to empirically determine parameters that give good results. These parameters are given hereafter as non-limiting examples.
- A good tradeoff between efficiency and practicability is obtained by selecting rectangular zones.
- Good results are obtained by using fixed-area rectangular zones, but whose dimensions h and w vary. A good tradeoff is obtained for a 256-data area.
- The number of per-user enrolled zones was set to 300.
- A threshold for matching decision (which is the ratio between the closest user matching number and the number of zones of the closest user template) between 0.7 and 0.8 was used. This threshold may be adapted, depending on the application, to get a good tradeoff between convenience and security.
- Considering that zones can slightly shift between enrolment and identification, zones where checked for matching for positions differing of up to 2 for x and y.

According to the invention, the biometric pseudonyms have the following properties.
- They are not sensitive, since it is not feasible to revert to the biometric data and not even to the biometric template.
- They can be as numerous as desired, by combining each time a different parameter data.
- Two biometric pseudonyms from a single class, enrolled with two different parameters data are not linkable to each other (i.e. it is practically unfeasible to know that the two pseudonyms are from the same class).
- They are revocable, by adding them to a black list of excluded pseudonyms, while allowing a user whose pseudonym was revoked to safely enrol a new pseudonym with a new parameter data using the same class.

Consequently, a system implementing the described methods solves privacy and security issues generally involved in biometric systems.

The preceding description of some preferred embodiments is provided as non-limiting examples and one skilled in the art will not encounter any particular difficulties in implementing a great number of variations of embodiment without going outside the scope of the present invention.

In particular, the preceding description is based on iris biometrics. It will be evident to apply the present invention to other biometric techniques producing fixed-size templates or to other biometric techniques by transforming templates into fixed-sized templates.

Moreover, the preceding description is based on an identification scenario involving one-to-many comparisons. It is of course applicable, with few modifications that can be easily performed by someone skilled in the art, to implement a verification scenario involving one-to-one comparison.

Using a different error-correcting code or hashing function is also an option that appears obvious to one skilled in the art.

In the preceding description, the identification algorithm is described as sequential operations. One skilled in the art will encounter no particular difficulty to parallelize the operations in order to improve the processing time.

## Claims

1. A method for generating a biometric pseudonym based on a biometric template, comprising the following steps:
- selecting a set of valid zones of a biometric template, each selected template zone having a shape, some dimensions and a position,
- projecting each selected template zone on an error-correcting code, to produce a set of projected template zones, and
- applying on each projected template zone a mathematical one-way transformation, to produce a set of transformed zones to be used as the biometric pseudonym.

2. The method of claims 1, wherein a user-dependent or application-dependent parameter data is combined to each projected template zone before producing the transformed zone by applying a mathematical one-way transformation on the combined data.

3. A procedure comprising the following steps:
- acquiring a plurality of enrolled biometric raw data, each one being from a different class,
- producing an enrolled biometric template from each enrolled biometric raw data,
- producing an enrolled biometric pseudonym from each enrolled biometric template, according to the method of claims 1 to 2,
- storing, in a non-volatile memory, for each zone of each enrolled biometric template:
- a class identifier, unique for all zones of a given class,
- the difference vector between the selected template zone and the projected template zone,
- the transformed zone,
- the shape of the selected template zone,
- the dimensions of the selected template zone, and
- the position of the selected template zone.

4. The procedure according to claim 3 comprising furthermore the following steps:
- acquiring an ongoing biometric raw data,
- producing an ongoing biometric template from the ongoing biometric raw data,
- selecting all possible ongoing valid zones of the ongoing biometric template, each selected template zone having a shape, some dimensions and a position,
- selecting a current enrolled class,
- selecting a current enrolled zone in the current enrolled class,
- subtracting the difference vector of the current enrolled zone to each ongoing valid zone, to produce a set of translated ongoing zones,
- projecting each translated ongoing zone on an error-correcting code, to produce a set of projected ongoing zones,
- transforming each projected ongoing zone by using a mathematical one-way transformation, to produce a set of transformed ongoing zones,
- implementing a searching process, to search if a transformed ongoing zone matches the current enrolled zone,
- iterating from the selection of a zone until all zones of the current class are processed,
- iterating from the selection of an enrolled class until all enrolled classes are processed,
- implementing a decision process, to decide if the ongoing biometric template is close enough to one enrolled biometric template.

5. The procedure according to claim 4, wherein the searching process comprises the following steps:
- searching among all transformed ongoing zone if a transformed ongoing zone matches the current enrolled zone,
- incrementing a per-class matching counter each time a transformed ongoing zone matches the current enrolled zone.

6. The procedure according to claim 5, wherein the decision process decides that the closest enrolled class is given by the per-class matching counter whose value is the highest, if said value is above a given threshold, said decision process stating that no enrolled class is close enough if said value is not above said threshold.

7. The procedure according to claim 5, wherein the searching process is halted as soon as a per-class matching counter is above a given threshold, and wherein the decision process decides that the closest enrolled class is given by said per-class matching counter whose value is above a given threshold, said decision process stating that no enrolled class is close enough if no per-class matching counter is above said threshold.

8. The procedure according to claim 5 wherein only one enrolled class is selected and wherein the decision process decides that the ongoing template is close enough from the selected enrolled class, if the value of the per-class matching counter of the selected enrolled class is above a given threshold.

9. The procedure according to claims 5 to 8 wherein a transformed ongoing zone matches the current enrolled zone when:
- a transformed ongoing zone and the current enrolled transformed zone are equal,
- the shapes of the zones are equal,
- the dimensions of the zones are equal, and
- the positions of the zones are equal.

10. The procedure according to claims 5 to 8 wherein a transformed ongoing zone matches the current enrolled zone when:
- a transformed ongoing zone and the current enrolled transformed zone are equal,
- the shapes of the zones are equal,
- the dimensions of the zones are equal, and
- the positions of the zones are not different from more than a given number.

11. The procedure according to claims 4 to 10, wherein a user-dependent or application-dependent parameter data is combined to each projected ongoing zone before producing the transformed ongoing zone by applying a mathematical one-way transformation on the combined data.
